# EUROPÄISCHE PATENTSCHRIFT

(11) **EP 0 496 271 B1**
(45) Veröffentlichungstag und Bekanntmachung des Hinweises auf die Patenterteilung: **17.04.1996**
(21) Anmeldenummer: 92100609.4
(22) Anmeldetag: 15.01.1992
(51) Int. Cl.: C05F 17/00, C05F 17/02

(54) **Verfahren und Vorrichtung zum Kompostieren von organischen Abfällen oder Klärschlamm**
Process and device for composting organic wastes or sewage sludge
Procédé et dispositif pour la transformation en compost des déchets organiques ou des boues d'épuration

(30) Priorität: 25.01.1991 DE 4102210
(43) Veröffentlichungstag der Anmeldung: 29.07.1992
(73) Patentinhaber: Weiss Bio Anlagen GmbH, D-35684 Dillenburg (DE)
(72) Erfinder: Greeb, Herbert, W-6340 Dillenburg 2 (Frohnhausen) (DE)
(74) Vertreter: Patentanwälte Leinweber & Zimmermann

(56) Entgegenhaltungen:
- DE-C- 3 800 201
- FR-A- 2 482 582
- US-A- 301 081
- US-A- 3 138 448

## Beschreibung

Die Erfindung betrifft ein Verfahren zum Kompostieren von organischen Abfällen oder Klärschlämmen sowie eine Vorrichtung zur Durchführung des Verfahrens. Insbesondere betrifft die Erfindung ein Verfahren zur Steuerung der Durchflußmenge an Belüftungsluft beim Kompostieren von organischen Abfällen und/oder Klärschlämmen, die einen geschlossenen Reaktionsbehälter von einer Eintrittsöffnung zu einer Austragsöffnung durchwandern und dabei im Gegenstrom von der dem Reaktionsbehälter zugeführten Belüftungsluft durchströmt werden, wobei laufend ein dem O₂-Gehalt der aus dem Reaktionsbehälter abgeführten Abluft entsprechender Meßwert gebildet wird und die Durchflußmenge der Belüftungsluft ausgehend von einem Mindestwert so lange bis zu einem Höchstwert gesteigert wird, bis der gemessene O₂-Gehalt der Abluft auf seinen minimalen Wert abgesunken ist sowie bei einem Ansteigen des O₂-Gehaltes der Abluft wieder herabgesetzt wird.

Bei einem derartigen, aus der DE-PS 38 00 201 bekannten Verfahren wird als dem O₂-Gehalt der aus dem Reaktionsbehälter abgeführten Abluft entsprechender Meßwert der CO₂-Gehalt der Abluft verwendet und die Durchflußmenge der Belüftungsluft in Abhängigkeit von diesem CO₂-Gehalt so geregelt, daß stets ein maximaler CO₂-Gehalt erreicht wird. Dies erfolgt dadurch, daß mit einer modulierten Regelung in Anlehnung an den CO₂- oder O₂-Istwert beginnend von einem vorgegebenen Mindestluftdurchsatz in bestimmten Schaltintervallen der Luftdurchsatz so lange gesteigert wird, bis der CO₂-Gehalt maximal ist und bei sinkendem CO₂-Gehalt nach dem Überschreiten dieses Maximums der Luftdurchsatz wieder vermindert wird. Bei diesem bekannten Verfahren wird der Luftdurchsatz somit stets so geregelt, daß der CO₂-Gehalt maximal ist, wobei jedoch offenbleibt, wie die Größe des Mindestluftdurchsatzes selbst vorzugeben ist.

Weiter ist aus der DE-OS 25 58 255 ein Verfahren zum Kompostieren von organischen Abfällen oder Klärschlamm mit modulierter Regelung bekannt, die beginnend bei einem vorgegebenen luftdurchsatz, so lange - in gewissen Schaltintervallen - den luftdurchsatz steigert, bis der max. CO₂-Gehalt erreicht ist. Als Sollwert wird der CO₂ bzw. O₂-Meßwert aus dem biologischen Prozeß verwendet.

Aus der US-A-3138448 ist ein Verfahren bekannt, bei dem bei nachlassender Aktivität der für die aerobe Zersetzung des zu kompostierenden Materials die Durchflußmenge der Belüftungsluft automatisch verringert wird. Gemäß diesem Verfahren wird zu Beginn der Kompostierung ein Maximalfluß der Belüftungsluft durch das zu kompostierende Material bewirkt. Unter diesen Bedingungen wird nach einer Betriebszeit von 24 Stunden die optimale Betriebstemperatur für die aerobe Zersetzung erreicht. Anschließend wird diese über eine Temperaturregelung der Durchflußmenge konstant gehalten. Gleichzeitig wird die Sauerstoffkonzentration der abgeführten Abluft gemessen. Wenn ein vorgegebener Konzentrationswert überschritten wird, wird die Luftzufuhr automatisch herabgesetzt. Ferner ist vorgesehen, eine Änderung der Luftzufuhr bei Unterschreiten einer vorgegebenen Konzentration vorzunehmen.

Aus der FR-A-2482582 ist ferner ein Kompostierungsverfahren bekannt, bei dem sowohl die Befeuchtung des zu kompostierenden Materials als auch die während des Kompostierungsvorgangs zugeführte Belüftungsluft auf der Grundlage der Temperatur, Sauerstoff- und CO₂-Konzentration im zu kompostierenden Material geteuert wird. Die Steuerung der Durchflußmenge der Belüftungsluft erfolgt dabei ausgehend von einem nicht näher angegebenen Anfangswert gemäß einem vorgegebenen Programm.

Schließlich ist aus der DE-OS 25 00 014 ein Verfahren zum Kompostieren von organischem Abfall oder Klärschlamm bekannt, bei dem die Durchflußmenge der den Reaktionsbehälter durchströmenden Belüftungsluft ohne Regelung mit Hilfe eines Regulierorgans fest eingestellt wird. Der O₂-Gehalt bzw. der CO₂-Gehalt der den Reaktionsbehälter verlassenden Abluft bleibt hier somit völlig unberücksichtigt.

Die Aufgabe der Erfindung ist es, das Verfahren der vorausgesetzten Art so weiterzubilden, daß die Durchflußmenge der den Reaktionsbehälter durchströmenden Belüftungsluft zu jedem Betriebszeitpunkt der für einen optimalen Kompostierungsprozeß erforderlichen Luftmenge möglichst genau entspricht.

Diese Aufgabe wird erfindungsgemäß dadurch gelöst, daß als Mindestwert der Durchflußmenge derjenige Wert gewählt wird, bei dem der O₂-Gehalt der abgeführten Abluft gegenüber dem O₂-Gehalt der zugeführten Belüftungsluft gerade abzufallen beginnt, und daß die Durchflußmenge zwischen dem Mindestwert und dem Höchstwert als monoton fallende Funktion des gemessenen O₂-Gehaltes gesteuert wird.

Das erfindungsgemäße Verfahren beruht also darauf, anstelle einer Regelung des O₂-Gehaltes bzw. des dem O₂-Gehalt entsprechenden Meßwertes in einer geschlossenen Regelschleife eine Steuerung der Durchflußmenge gemäß einem Optimalkriterium auszuführen, so daß diese stets eine sowohl bezüglich des Reaktionsablaufs als auch des Bedarfs an Gebläseleistung am günstigsten gesteuerte Größe ist.

Erfindungsgemäß erfolgt die Steuerung der Durchflußmenge innerhalb eines durch einen Mindestwert und einen Höchstwert begrenzten Bereichs, wobei als Mindestwert derjenige Wert gewählt wird, bei dem der O₂-Gehalt der abgeführten Abluft gegenüber dem O₂-Gehalt der zugeführten Belüftungsluft gerade abzufallen beginnt. Dadurch ist gewährleistet, daß die Durchflußmenge stets mindestens den für den Beginn der biologischen Vorgänge beim Kompostierungsprozeß notwendigen Mindestwert hat.

Weiterhin wird erfindungsgemäß die Durchflußmenge zwischen dem Mindestwert und dem Höchstwert als monoton fallende Funktion des gemessenen O₂-Gehaltes gesteuert. Dadurch wird erreicht, daß nachdem die biologischen Kompostierungsprozesse in Gang gekommen sind und die Mindestaktivität überschritten worden ist, die Durchflußmenge stets nur so lange gesteigert wird, solange die Steigerung auch eine Zunahme der biologischen Aktivität bewirkt, was sich in einem Abfallen des gemessenen O₂-Gehaltes niederschlägt.

Von besonderem Vorteil im Hinblick auf eine Vereinfachung der zur Durchführung des erfindungsgemäßen Verfahrens notwendigen Steuerungsmaßnahmen ist es, die Durchflußmenge als lineare Funktion des gemessenen O₂-Gehalts einzustellen oder den Funktionsverlauf durch einen treppenförmigen Funktionsverlauf anzunähern, wobei der angenäherte Funktionsverlauf entweder wiederum eine monoton fallende Funktion allgemeiner Form oder aber insbesondere eine lineare Funktion sein kann.

Von besonderem Vorteil ist es, den Mindestwert oder den Höchstwert oder beide Werte in einem Anfangslauf zu ermitteln und für den weiteren Verfahrensablauf abzuspeichern, so daß bei der weiteren Durchführung des Verfahrens auf die in dieser Weise festgelegte Steuerkurve zurückgegriffen werden kann.

Schließlich wird durch die vorliegende Erfindung eine Vorrichtung zur Durchführung des erfindungsgemäßen Verfahrens angegeben.

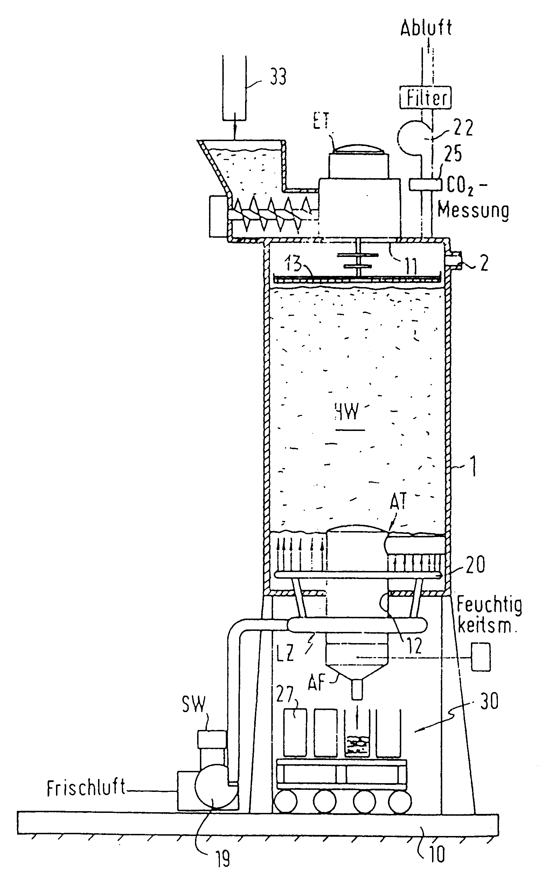

Im folgenden wird ein Ausführungsbeispiel der Erfindung anhand der Zeichnung erläutert. Die Figur zeigt eine Vorrichtung zum Kompostieren von organischen Abfällen und/oder Klärschlämmen, bei der das erfindungsgemäße Verfahren zur Durchführung gelangt.

Auf einem im Erdboden gegründeten Fundament 10 ist ein im Querschnitt kreisförmiger, geschlossener Reaktionsbehälter 1 aufrecht stehend angeordnet. Der Reaktionsbehälter 1 verfügt über wärmeisolierende Außenwandungen und eine an der Oberseite zentrisch angeordnete Eintrittsöffnung 11 sowie eine an der Unterseite zentrisch angeordnete Austrittsöffnung 12. Die Zufuhr der zu kompostierenden organischen Abfälle oder Klärschlämme erfolgt zunächst über eine Fördereinrichtung 33, von der das zugeführte Gut an eine Zufuhreinrichtung ET abgegeben wird. Die Zufuhreinrichtung ET kann beispielsweise, wie in der Zeichnung dargestellt, über eine Förderschnecke als Förderorgan verfügen. Das zugeführte Gut wird durch die Eintrittsöffnung in den Reaktionsbehälter 1 eingebracht und mittels einer Verteilereinrichtung 13 gleichmäßig auf der Oberseite eines bereits in dem Reaktionsbehälter 1 durch das zugeführte Gut gebildeten Haufwerks HW in Form einer Materialsäule verteilt.

Im unteren Teil des Reaktionsbehälters 1 ist eine Austragvorrichtung AT angeordnet, die über ein um eine zentrisch im Reaktionsbehälter befindliche Welle rotierendes Austragwerkzeug verfügt, mit dessen Hilfe von der Unterseite des Haufwerks HW gleichmäßig Material abgetragen und durch die Austrittsöffnung 12 aus dem Reaktionsbehälter 1 nach außen befördert wird. Unter der Austragvorrichtung AT ist eine Abfüllvorrichtung AF angeordnet, durch die das ausgetragene Material in Säcke 27 abgefüllt wird, die auf einer Transporteinrichtung 30 vorgehalten werden.

Weiterhin befindet sich im unteren Teil des Reaktionsbehälters 1 und unterhalb des umlaufenden Austragwerkzeugs der Austragvorrichtung AT eine Luftverteilereinrichtung 20, die an eine Belüftungseinrichtung LZ angeschlossen ist. Von einem außerhalb des Reaktionsbehälters 1 befindlichen Druckgebläse 19 wird aus der Umgebung aufgenommene Frischluft zu der Belüftungseinrichtung LZ und von dort in die Luftverteilereinrichtung 20 gefördert, so daß das in dem Reaktionsbehälter 1 befindliche Haufwerk HW von seiner Unterseite her mit der Belüftungsluft beaufschlagt wird. Diese Belüftungsluft durchströmt die in dem Reaktionsbehälter 1 langsam nach unten wandernde Materialsäule des Haufwerks HW im Gegenstrom zur Oberseite des Reaktionsbehälters 1. Von dort wird die Luft durch ein Sauggebläse 22 abgezogen und nach Filterung als Abluft entweder in die Umgebung abgegeben oder anderweitig abgeleitet.

Im Weg der Abluft befindet sich eine Fühlereinrichtung 25. In dieser Fühlereinrichtung 25 wird eine CO₂-Messung vorgenommen, wobei der auf diese Weise gewonnene Meßwert ein Maß für den O₂-Gehalt der aus dem Reaktionsbehälter 1 abgeführten Abluft ist. Anstelle der Messung des CO₂-Gehalts kann auch eine direkte Messung des O₂-Gehalts der Abluft erfolgen. Das Druckgebläse 19 wird durch eine Steuereinrichtung SW in Abhängigkeit von dem O₂-Gehalt der Abluft entsprechend dem in der Fühlereinrichtung 25 gemessenen CO₂-Gehalt gesteuert. Das Sauggebläse 22 kann entweder ebenfalls durch die Steuereinrichtung SW gesteuert werden oder aber über eine eigene Steuereinrichtung verfügen, die beispielsweise auf den Innendruck im oberen Teil des Reaktionsbehälters 1 anspricht. Weiterhin befindet sich im oberen Teil des Reaktionsbehälters 1 ein Unterdruckventil 2 , durch das beim Unterschreiten eines bestimmten Unterdrucks eine Verbindung mit der umgebenden Atmosphäre hergestellt wird, um zu verhindern, daß im Falle einer Fehlsteuerung der Reaktionsbehälter 1 infolge einer zu großen Druckdifferenz beschädigt wird.

Die Durchflußmenge der die Materialsäule durchströmenden Belüftungsluft wird durch die Steuereinrichtung SW in Abhängigkeit von dem dem O₂-Gehalt der aus dem Reaktionsbehälter 1 abgeführten Abluft entsprechenden, in der Fühlereinrichtung 25 gemessenen CO₂-Gehalt eingestellt. Dabei wird die Durchflußmenge in einem Bereich zwischen einem Mindestwert und einem Höchstwert in Abhängigkeit einer monoton fallenden Funktion des gemessenen O₂-Gehaltes der Abluft gesteuert, wobei als Mindestwert der Durchflußmenge derjenige Wert gewählt wird, bei dem der O₂-Gehalt der abgeführten Abluft gegenüber dem O₂-Gehalt der zugeführten Belüftungsluft, also im Falle der Zuführung von Frischluft gegenüber dem O₂-Gehalt von 21 % der Umgebungsluft, gerade abzufallen beginnt. Dieser Mindestwert der Durchflußmenge entspricht dem Luftdurchsatz, bei dem die aeroben Kompostierungsprozesse in dem Reaktionsbehälter 1 gerade in Gang kommen. Durch die dabei stattfindenden biologischen Abbauprozesse wird ein Teil des O₂-Gehalts der zugeführten Belüftungsluft in CO₂ umgesetzt, so daß der CO₂-Gehalt im Reaktionsbehälter 1 und damit in der abgeführten Abluft ansteigt, was sich in einer Erhöhung des in der Fühlereinrichtung 25 gemessenen CO₂-Wertes niederschlägt, was einer Erniedrigung des O₂-Gehaltes in der Abluft gleichkommt. Aufgrund der Steuerung der Durchflußmenge der zugeführten Belüftungsluft als monoton fallende Funktion des aus der CO₂-Messung in der Fühlereinrichtung 25 bestimmten O₂-Gehaltes der Abluft wird bei einem Absinken des O₂-Gehaltes die Durchflußmenge der Belüftungsluft erhöht, was eine weitere Förderung der aeroben Kompostierungsprozesse nach sich zieht. Die Durchflußmenge der zugeführten Belüftungsluft wird in Abhängigkeit vom O₂-Gehalt der Abluft so lange erhöht, bis ein bestimmter Höchstwert der Durchflußmenge erreicht wird. Dieser Höchstwert entspricht der höchsten biologischen Aktivität in dem Reaktionsbehälter 1, die sich im höchsten CO₂-Gehalt der Abluft, entsprechend dem niedrigsten O₂-Wert, äußert. Der diesem Höchstwert der Durchflußmenge entsprechende O₂-Gehalt der Abluft kann beispielsweise im Bereich von 10 % liegen, so daß bei der Verwendung von Umgebungsluft als zugeführter Belüftungsluft mit einem O₂-Gehalt von 21 % der durch den Mindest- und den Höchstwert begrenzte Bereich des O₂-Gehalts der abgeführten Abluft zwischen 21 und 10 % liegt. Dem Höchstwert des O₂-Gehalts kann beispielsweise eine Durchflußmenge entsprechend dem 1fachen Inhalt des Reaktionsbehälters 1 pro Stunde zugeordnet sein, wohingegen dem Mindestwert des O₂-Gehaltes eine Durchflußmenge entsprechend dem 3fachen des Inhalts des Reaktionsbehälters 1 pro Stunde zugeordnet sein kann.

Zwischen dem Mindestwert und dem Höchstwert des O₂-Gehalts wird die Durchflußmenge der zugeführten Belüftungsluft in monoton fallender Abhängigkeit vom O₂-Gehalt gesteuert, d. h. mit steigendem O₂-Gehalt ist eine Abnahme der Durchflußmenge verbunden bzw. mit Abfallen des O₂-Gehaltes erfolgt eine Zunahme der Durchflußmenge. Die Steuerung der Durchflußmenge in monoton fallender Abhängigkeit des gemessenen O₂-Gehalts kann grundsätzlich mit beliebigem Funktionsverlauf erfolgen. Besonders einfach ist die Steuerung jedoch, wenn die Durchflußmenge als lineare Funktion des gemessenen O₂-Gehalts gesteuert wird. Weiterhin kann es von Vorteil sein, den Funktionsverlauf durch einen treppenförmigen Verlauf der Steuerkurve anzunähern, so daß jeweils innerhalb bestimmter Bereiche des O₂-Gehalts keine Änderung der Durchflußmenge der zugeführten Belüftungsluft erfolgt. Bei Annäherung an einen linearen Funktionsverlauf hat die treppenförmige Funktion somit die Form von Intervallen gleicher Länge und gleicher Höhe.

Der Mindestwert der Durchflußmenge der Belüftungsluft, bei dem der O₂-Gehalt der Abluft gegenüber dem O₂-Gehalt der zugeführten Belüftungsluft gerade abzufallen beginnt, ist naturgemäß von der Art der verarbeiteten organischen Abfälle oder Klärschlämme, von der Auslegung der Anlage und von den einzelnen Betriebsparametern abhängig. Ähnliches gilt auch für den Höchstwert der Durchflußmenge entsprechend der maximalen biologischen Aktivität in dem Reaktionsbehälter 1. Diese Werte werden daher in einem Anfangslauf während der Inbetriebnahme der Anlage zu bestimmen sein und können dann so lange beibehalten werden, solange keine wesentliche Veränderung der Betriebsbedingungen stattfindet. Zur Speicherung des Mindestwertes und des Höchstwertes ist daher in der Steuereinrichtung SW eine Speichereinrichtung vorgesehen. Für den Fall, daß sich ändernde, jedoch vorhersehbare oder reproduzierbare Betriebsbedingungen zu erwarten sind, kann diese Speichereinrichtung so ausgelegt sein, daß in ihr jeweils mehrere Mindest- und Höchstwerte zur Verfügung stehen, die in Abhängigkeit von den sich ändernden Betriebsbedingungen oder Parametern abgerufen werden können. Ebenso kann es vorgesehen werden, den Verlauf der Steuerfunktion in Abhängigkeit von den jeweiligen Betriebsbedingungen zu verändern.

## Patentansprüche

1. Verfahren zur Steuerung der Durchflußmenge an Belüftungsluft beim Kompostieren von organischen Abfällen und/oder Klärschlämmen, die einen geschlossenen Reaktionsbehälter von einer Eintrittsöffnung zu einer Austragsöffnung durchwandern und dabei im Gegenstrom von der dem Reaktionsbehälter zugeführten Belüftungsluft durchströmt werden, wobei laufend ein dem O₂-Gehalt der aus dem Reaktionsbehälter abgeführten Abluft entsprechender Meßwert gebildet wird und die Durchflußmenge der Belüftungsluft ausgehend von einem Mindestwert so lange bis zu einem Höchstwert gesteigert wird, bis der gemessene O₂-Gehalt der Abluft auf seinen minimalen Wert abgesunken ist sowie bei einem Ansteigen des O₂-Gehaltes der Abluft wieder herabgesetzt wird, dadurch **gekennzeichnet**, daß als Mindestwert der Durchflußmenge derjenige Wert gewählt wird, bei dem der O₂-Gehalt der abgeführten Abluft gegenüber dem O₂-Gehalt der zugeführten Belüftungsluft gerade abzufallen beginnt, und daß die Durchflußmenge zwischen dem Mindestwert und dem Höchstwert als monoton fallende Funktion des gemessenen O₂-Gehaltes gesteuert wird.

2. Verfahren nach Anspruch 1, dadurch **gekennzeichnet**, daß die Durchflußmenge eine lineare Funktion des gemessenen O₂-Gehaltes ist.

3. Verfahren nach Anspruch 1 oder 2, dadurch **gekennzeichnet**, daß der Funktionsverlauf durch einen treppenförmigen Funktionsverlauf angenähert wird.

4. Verfahren nach einem der Ansprüche 1 bis 3, dadurch **gekennzeichnet**, daß der Mindestwert und/oder der Höchstwert in einem Anfangslauf ermittelt und für den weiteren Verfahrensablauf gespeichert werden.

5. Vorrichtung zur Durchführung des Verfahrens nach einem der Ansprüche 1 bis 4, mit einem geschlossenen Reaktionsbehälter zur Aufnahme von zu kompostierenden organischen Abfällen und/oder Klärschlämmen, die den Reaktionsbehälter als Materialsäule vertikal von einer oberen Eintrittsöffnung zu einer unteren Austragsöffnung durchwandern, einer zur Durchleitung von Belüftungsluft durch den Reaktionsbehälter im Gegenstrom zu der Materialsäule dienenden Belüftungseinrichtung, einer Fühlereinrichtung zur laufenden Bildung eines dem O₂-Gehalt der aus dem Reaktionsbehälter abgeführten Abluft entsprechenden Meßwertes und einer zur Einstellung der von der Belüftungseinrichtung geförderten Durchflußmenge an Belüftungsluft dienenden Steuereinrichtung, dadurch **gekennzeichnet**, daß die Steuereinrichtung eine Speichereinrichtung zur Aufnahme und Speicherung des Mindestwertes und des Höchstwertes der Durchflußmenge der Belüftungsluft aufweist und daß die Steuereinrichtung die Durchflußmenge zwischen dem Mindestwert und dem Höchstwert als monoton fallende Funktion des gemessenen O₂-Gehaltes steuert.

6. Vorrichtung nach Anspruch 5, dadurch **gekennzeichnet**, daß die Speichereinrichtung (SW) zur Aufnahme und Speicherung jeweils mehrerer Mindest- und Höchstwerte der Durchflußmenge der Belüftungsluft ausgebildet ist, wobei die verschiedenen Mindest- und Höchstwerte in Abhängigkeit von jeweils veränderten Betriebsbedingungen abrufbar sind.

7. Vorrichtung nach Anspruch 5 oder 6, dadurch **gekennzeichnet**, daß die Steuereinrichtung so ausgebildet ist, daß in Abhängigkeit von jeweils verschiedenen Betriebsbedingungen eine Steuerung entsprechend unterschiedlichen monoton fallenden Funktionsverläufen durchführbar ist.

## Claims

1. Process for controlling the aeration air flow rate in the composting of organic wastes and/or sewage sludges which pass through a closed reaction vessel from an intake orifice to a discharge orifice and in the course of this the aeration air fed to the reaction vessel flows through them in countercurrent, a measured value being continuously formed corresponding to the O₂ content of the exhaust air removed from the reaction vessel and the aeration air flow rate, starting from a minimum value, being increased up to a maximum value until the measured O₂ content of the exhaust air has decreased to its minimum value and being decreased again in the event of an increase of the O₂ content of the exhaust air, characterized in that the minimum value of the flow rate selected is that value at which the O₂ content of the removed exhaust air just begins to decrease in comparison with the O₂ content of the aeration air fed, and in that the flow rate is controlled between the minimum value and the maximum value as a monotonically decreasing function of the measured O₂ content.

2. Process according to Claim 1, characterized in that the flow rate is a linear function of the measured O₂ content.

3. Process according to Claim 1 or 2, characterized in that the function course is approximated by a stepped function course.

4. Process according to one of Claims 1 to 3, characterized in that the minimum value and/or the maximum value are determined in a starting run and are stored for the further process sequence.

5. Apparatus for carrying out the process according to one of Claims 1 to 4, having a closed reaction vessel for receiving organic wastes and/or sewage sludges to be composted which pass through the reaction vessel as a material column vertically from an upper intake orifice to a lower discharge orifice, an aeration device serving to pass aeration air through the reaction vessel in countercurrent to the material column, a sensor device for the continuous formation of a measured value corresponding to the O₂ content of the exhaust air removed from the reaction vessel, and a control device serving to set the aeration air flow rate delivered by the aeration device, characterized in that the control device has a storage device for receiving and storing the minimum value and the maximum value of the aeration air flow rate and in that the control device controls the flow rate between the minimum value and the maximum value as a monotonically decreasing function of the measured O₂ content.

6. Apparatus according to Claim 5, characterized in that the storage device (SW) is designed to receive and store in each case a plurality of minimum and maximum values of the aeration air flow rate, the various minimum and maximum values being retrievable as a function of the respective changed operating conditions.

7. Apparatus according to Claim 5 or 6, characterized in that the control device is designed in such a way that control can be carried out in accordance with different monotonically decreasing function courses as a function of the respective different operating conditions.

## Revendications

1. Procédé de régulation du débit d'air d'aération lors de la transformation en compost de déchets organiques et/ou de boues d'épuration circulant dans une cuve de réaction fermée depuis un orifice d'entrée jusqu'à un orifice de récupération et traversés à contre-courant par l'air d'aération introduit dans la cuve d'aération, dans lequel une valeur correspondant à la teneur en O₂ de l'air évacué de la cuve de réaction est déterminée de manière continue et le débit d'air d'aération est augmenté à partir d'une valeur minimale à une valeur maximale jusqu'à ce que la teneur en O₂ mesurée de l'air évacué soit revenue à sa valeur minimale, ou bien à nouveau diminué lorsque la teneur en O₂ de l'air évacué augmente, caractérisé en ce que la valeur de débit minimale retenue est la valeur à laquelle la teneur en O₂ de l'air évacué commence juste à décroître par rapport à la teneur en O₂ de l'air d'aération introduit, et en ce que le débit est régulé entre la valeur minimale et la valeur maximale comme une fonction décroissante monotone de la teneur en O₂ mesurée.

2. Procédé selon la revendication 1, caractérisé en ce que le débit est une fonction linéaire de la teneur en O₂ mesurée.

3. Procédé selon la revendication 1 ou 2, caractérisé en ce que la courbe de la fonction est approchée par une courbe en escalier.

4. Procédé selon l'une des revendications 1 à 3, caractérisé en ce que la valeur minimale et/ou la valeur maximale sont déterminées à l'aide d'un passage initial et stockées pour la suite de l'exécution du procédé.

5. Dispositif permettant de réaliser le procédé selon l'une des revendications 1 à 4, comprenant une cuve de réaction fermée destinée à recevoir les déchets organiques et/ou les boues d'épuration à transformer en compost, qui traversent verticalement la cuve de réaction sous forme d'une colonne de matière depuis un orifice d'entrée supérieur jusqu'à un orifice de récupération inférieur, un système d'aération destiné à introduire de l'air d'aération dans la cuve de réaction à contre-courant de la colonne de matière, un système de capteur permettant de déterminer en continu la teneur en O₂ de l'air évacué de la cuve de réaction, et un système de commande du débit d'air d'aération nécessaire au système d'aération, caractérisé en ce que le système de commande possède un système de stockage destiné à recevoir et stocker les valeurs minimale et maximale du débit d'air d'aération, et en ce que le système de commande régule le débit entre la valeur minimale et la valeur maximale selon une fonction décroissante monotone de la teneur en O₂ mesurée.

6. Dispositif selon la revendication 5, caractérisé en ce que le système de stockage (SW) est prévu pour recevoir et stocker plusieurs valeurs minimales et maximales du débit d'air d'aération, les différentes valeurs minimales et maximales pouvant être rappelées en fonction de conditions de fonctionnement variables.

7. Dispositif selon la revendication 5 ou 6, caractérisé en ce que le système de commande est prévu pour permettre une régulation selon différentes fonctions décroissantes monotones en fonction de conditions de fonctionnement différentes.
